# FASCICULE DE BREVET EUROPEEN

(11) **EP 2 491 047 B1**
(45) Date de publication et mention de la délivrance du brevet: **30.03.2016**
(21) Numéro de dépôt: 10782649.7
(22) Date de dépôt: 06.10.2010
(51) Int. Cl.: C07F 5/00, B01J 23/08

(54) **NOUVEAU MATERIAU HYBRIDE ORGANIQUE-INORGANIQUE IHM-2 ET PROCEDES DE PREPARATION**
NEUES ORGANISCH-ANORGANISCHES HYBRIDMATERIAL IHM-2 UND HERSTELLUNGSVERFAHREN DAFÜR
NOVEL ORGANIC/INORGANIC HYBRID MATERIAL IHM-2, AND METHODS FOR MANUFACTURING SAME

(30) Priorité: 23.10.2009 FR 0905101
(43) Date de publication de la demande: 29.08.2012
(73) Titulaire: IFP Énergies nouvelles, 92852 Rueil-Malmaison Cedex (FR); CNRS, 75794 Paris Cedex 16 (FR)
(72) Inventeur: SAVONNET, Marie, F-69001 Lyon (FR); FARRUSSENG, David, F-69380 Belmont d'Azegues (FR); PINEL, Catherine, F-69007 Lyon (FR); BAZER-BACHI, Delphine, F-69230 St-Genis-Laval (FR); BATS, Nicolas, F-69320 Feyzin (FR); LECOCQ, Vincent, F-69530 Brignais (FR)
(86) Numéro de dépôt international: PCT/FR2010/000673
(87) Numéro de publication internationale: WO 2011/048284

(56) Documents cités:
- EP-A1- 1 785 428
- WO-A1-2008/061958
- US-A1- 2005 004 404
- VOLKRINGER, C. ET AL.: "The Kagomé Topology of the Gallium and Indium Metal-Organic Framework Types with a ML-68 Structure: Synthesis, XRD, Solid-State NMR Characetrizations, and Hydrogen Adsorption", INORGANIC CHEMISTRY, vol. 47, 2008, pages 11892-11901, XP002565402,

## Description

### Domaine technique de l'invention

L'invention concerne un nouveau procédé de préparation d'un matériau hydride à matrice mixte organique-inorganique cristallisé appelé ci-après IHM-2, ainsi que son utilisation comme catalyseur ou adsorbant.

### Art antérieur

La famille des solides poreux, d'une importance incontestable autant dans des applications de la vie courante qu'industrielles, suscite encore et toujours un intérêt majeur dans les travaux de recherche réalisés dans le domaine des matériaux.

Les solides poreux inorganiques ont largement été étudiés afin d'accroître l'ouverture de leurs structures de façon à faciliter l'accès des réactifs vers le site actif ou le départ des produits depuis ce site actif.

Depuis les années 1990, un intérêt particulier s'est manifesté pour des composés hybrides à matrice mixte organique-inorganique, portant ainsi le nombre de groupes distinguant les types de matériaux poreux à 3 : les matériaux inorganiques, les matériaux carbonés et les matériaux hybrides aussi appelés polymères de coordination.

Ces polymères de coordination, dont les premiers ont été décrits dans les années 1960, font l'objet d'un nombre croissant de publications. En effet, l'effervescence autour de ces matériaux a permis d'atteindre une diversité structurale déjà avancée en peu de temps (Férey G., l'actualité chimique, janvier 2007, n°304). Conceptuellement, les solides hybrides poreux à matrice mixte organique-inorganique sont assez semblables aux solides poreux à squelette inorganique. Comme ces derniers, ils associent des entités chimiques en donnant naissance à une porosité. La principale différence réside dans la nature de ces entités. Cette différence est particulièrement avantageuse et est à l'origine de toute la versatilité à cette catégorie de solides hybrides. En effet, la taille des pores devient, par l'utilisation de ligands organiques, ajustable par le biais de la longueur de la chaîne carbonée. La charpente, qui dans le cas des matériaux poreux inorganiques, ne pouvait accepter que quelques éléments (Si, Al, Ge, Ga, éventuellement Zn) peut, dans ce cas, utiliser tous les cations (sauf les alcalins). Pour ces matériaux, aucun agent structurant spécifique n'est requis, le solvant joue cet effet à lui seul.

Il apparaît donc clairement que cette classe de matériaux permet une multiplicité de structures et par conséquent des solides finement adaptés aux applications qu'on leur destine.

Les polymères de coordination comprennent au moins deux éléments appelés connecteurs et ligands dont l'orientation et le nombre des sites de liaisons sont déterminants dans la structure du matériau hybride. De la diversité de ces ligands et connecteurs naît, comme on l'a déjà précisé, une immense variété de matériaux hybrides.

Par ligand, on désigne la partie organique du matériau hybride. Ces ligands sont, le plus souvent, des di- ou tri-carboxylates ou des dérivés de la pyridine. Quelques ligands organiques fréquemment rencontrés sont représentés ci-après : bdc = benzene-1,4-dicarboxylate, btc = benzene-1,3,5-tricarboxylate, ndc = naphtalene-2,6-dicarboxylate, bpy = 4,4'-bipyridine, hfipbb = 4,4'-(hexafluororisopropylidene)-bisbenzoate, cyclam = 1,4,8,11-tetraazacyclotetradecane.

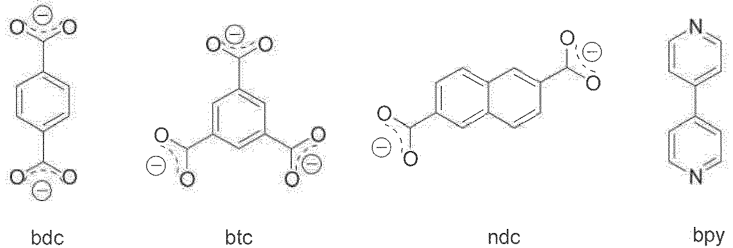

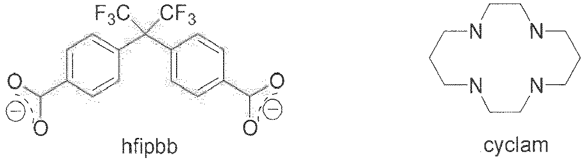

Par connecteur, on désigne l'entité inorganique du matériau hybride. Il peut s'agir d'un cation seul, d'un dimère, d'un trimère ou d'un tétramère ou encore d'une chaîne ou d'un plan.

Les équipes de Yaghi et Férey ont ainsi décrit un nombre important de nouveaux matériaux hybrides (série des MOF - "Metal Organic Framework" - et série des MIL -"Matériaux de l'Institut Lavoisier" , respectivement). De nombreuses autres équipes ont suivi cette voie et aujourd'hui le nombre de nouveaux matériaux hybrides décrits est en pleine expansion. Le plus souvent, les études visent à mettre au point des structures ordonnées, présentant des volumes poreux extrêmement importants, une bonne stabilité thermique et des fonctionnalités chimiques ajustables.

Par exemple, Yaghi *et al.* décrivent une série de structures à base de bore dans la demande de brevet US2006/0154807 et indiquent leur intérêt dans le domaine du stockage des gaz. Le brevet US 7,202,385 divulgue un récapitulatif particulièrement complet des structures décrites dans la littérature et illustre parfaitement la multitude de matériaux existant déjà à ce jour.

T. Loiseau et al. (Inorganic Chemistry. 2008, 47, 11892-11901) décrit une phase MIL-68 à base d'atomes d'indium ou de gallium et de ligands type BDC (benzène-1,4-dicarboxylate). Ce composé présente une structure tridimensionnelle dans laquelle les chaînes inorganiques unidimensionnelles à motif -In-O(H)- ou -Ga-O(H)- sont liées entre elles par les ligands téréphtaliques déprotonnés (BDC = O₂C-C₆H₄-CO₂). Chaque atome de gallium ou d'indium est hexacoordiné, deux atomes d'oxygène des groupements hydroxyles se situant en position apicale et quatre atomes d'oxygène issus de quatre ligands téréphtaliques se localisant en position équatoriale. De plus, un ligand organique est relié à deux atomes d'indium ou de gallium (un couple d'atomes voisins d'indium ou de gallium).

### Description de l'invention

La présente invention a pour objet un nouveau procédé de préparation d'un matériau hybride cristallisé à matrice organique-inorganique, appelé IHM-2, contenant un réseau inorganique de centres métalliques à base de l'élément indium connectés entre eux par des ligands organiques formés par l'entité 2-aminotéréphtalate O₂C-C₆H₃-NH₂-CO₂-. Ledit matériau IHM-2 présente une structure cristalline isostructurale à celle des matériaux MIL-68 connus et décrits ci-dessus.

Le matériau hybride cristallisé IHM-2 préparé selon l'invention présente un diagramme de diffraction des rayons X incluant au moins les raies inscrites dans le tableau 1. Ce diagramme de diffraction est obtenu par analyse radiocristallographique au moyen d'un diffractomètre Bruker D5005 équipé d'un monochromateur arrière courbe graphite et d'un détecteur à scintillation, en utilisant la méthode classique des poudres avec le rayonnement Kα1 du cuivre (λ=1,5406Å). A partir de la position des pics de diffraction représentée par l'angle 2θ, on calcule, en appliquant la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue de Δ(2θ) égale à ±0,02° est communément admise. L'intensité relative I/I₀ affectée à chaque valeur de dₕₖₗ est mesurée d'après la hauteur du pic de diffraction correspondant. Le diagramme de diffraction des rayons X du matériau hybride cristallisé IHM-2 selon l'invention comporte au moins les raies aux valeurs de dₕₖₗ données dans le tableau 1. Dans la colonne des dₕₖₗ, on a indiqué les valeurs moyennes des distances inter-réticulaires en Angströms (Å). Chacune de ces valeurs doit être affectée de l'erreur de mesure Δ(dₕₖₗ) comprise entre ±0,3 Å et ±0,01 Å.

**Tableau 1 : Valeurs moyennes des dₕₖₗ et intensités relatives mesurées sur un diagramme de diffraction de rayons X du matériau hybride cristallisé IHM-2.**

| 2 Thêta (°) | dₕₖₗ (Å) | I/I₀ | 2 Thêta (°) | dₕₖₗ (Å) | I/I₀ |
|---|---|---|---|---|---|
| 4,70 | 18,80 | mf | 27,71 | 3,22 | ff |
| 8,12 | 10,88 | ff | 28,42 | 3,14 | ff |
| 9,37 | 9,43 | FF | 29,73 | 3,00 | f |
| 12,41 | 7,13 | ff | 30,14 | 2,96 | ff |
| 13,12 | 6,74 | ff | 31,23 | 2,86 | ff |
| 14,10 | 6,28 | ff | 32,96 | 2,72 | ff |
| 14,76 | 6,00 | ff | 33,47 | 2,68 | ff |
| 16,29 | 5,44 | f | 34,29 | 2,61 | ff |
| 16,95 | 5,23 | f | 35,42 | 2,53 | ff |
| 18,83 | 4,71 | mf | 37,99 | 2,37 | ff |
| 20,54 | 4,32 | ff | 41,75 | 2,16 | ff |
| 21,07 | 4,21 | ff | 42,73 | 2,11 | ff |
| 23,61 | 3,76 | ff | 43,98 | 2,06 | ff |
| 24,68 | 3,60 | ff | 49,18 | 1,85 | ff |
| 24,99 | 3,56 | f | 51,55 | 1,77 | ff |
| 26,01 | 3,42 | ff | 53,58 | 1,71 | ff |
| 26,44 | 3,37 | f | 54,45 | 1,68 | ff |

où FF = très fort ; F = fort ; m = moyen ; mf = moyen faible ; f = faible ; ff = très faible. L'intensité relative I/I₀ est donnée en rapport à une échelle d'intensité relative où il est attribué une valeur de 100 à la raie la plus intense du diagramme de diffraction de rayons X : ff < 15 ; 15 ≤ f < 30; 30 ≤ mf < 50; 50 ≤ m < 65; 65 ≤ F < 85; FF ≥ 85.

Le matériau hybride cristallisé IHM-2 préparé selon l'invention présente une structure cristalline de base ou topologie qui est caractérisée par son diagramme de diffraction X donné par la figure 1.

Le matériau hybride cristallisé IHM-2 préparé selon l'invention présente ainsi une composition chimique ayant pour motif de base In(OH)(-O₂C-C₆H₃-NH₂-CO₂-). Ce motif est répété n fois, la valeur de n dépendant de la cristallinité dudit solide.

Ledit matériau IHM-2 présente une structure tridimensionnelle dans laquelle les chaînes inorganiques unidimensionnelles à motif -In-O(H)- sont liées entre elles par les ligands 2-aminotéréphtalate (-O₂C-C₆H₃-NH₂-CO₂-, noté NH₂-BDC). Chaque atome d'indium est hexacoordiné : chaque atome d'indium est entouré de deux atomes d'oxygène des groupements hydroxyles se situant en position apicale et de quatre atomes d'oxygène issus de quatre ligands 2-aminotéréphtalate se localisant en position équatoriale. De plus, chaque ligand organique -O₂C-C₆H₃-NH₂-CO₂- (NH₂-BDC) est relié à deux atomes d'indium.

La présente invention a pour objet la préparation dudit matériau hybride cristallisé IHM-2 à matrice mixte organique-inorganique. On décrit ci-après deux procédés de préparation dudit matériau IHM-2.

Un premier procédé de préparation dudit matériau hybride cristallisé IHM-2 à matrice mixte organique-inorganique comprend au moins les étapes suivantes :
i) la dissolution d'au moins un précurseur d'indium (Préc-In) dans au moins un solvant organique polaire,
ii) l'ajout d'acide 2-aminotéréphtalique (NH₂-H₂-BDC) en solution dans au moins un solvant organique polaire,
iii) l'ajout d'une base B, en solution dans au moins un solvant organique polaire, dans le mélange obtenu à l'étape ii),
iv) la précipitation de l'acide 2-aminotéréphtalique et dudit précurseur d'indium avec ladite base,
v) la filtration et le lavage, et
vi) le séchage du matériau obtenu.

Conformément à ladite étape i) dudit premier procédé de préparation selon l'invention, ledit précurseur d'indium (noté Préc-In) est choisi parmi les sels d'indium (III) tels que les chlorures, sulfates, acétates ou nitrates d'indium. Très préférentiellement, le précurseur d'indium est le nitrate d'indium In(NO₃)₃. Ledit précurseur d'indium est dissous dans un solvant organique polaire ou un mélange de solvants organiques polaires. Ledit solvant est préférentiellement choisi parmi le diméthylformamide (DMF), le diméthylsulfoxide (DMSO), le méthanol (MeOH), l'éthanol (EtOH), l'eau (H₂O) et le tétrahydrofurane (THF), très préférentiellement il s'agit du DMF. Un mélange de solvants organiques polaires comprend au moins deux solvants choisis parmi cette liste. Par exemple, ledit précurseur d'indium est dissous dans un mélange DMSO/MeOH, DMF/EtOH, THF/H₂O.

Conformément à ladite étape ii) dudit premier procédé de préparation selon l'invention, l'acide 2-aminotéréphtalique correspond à l'acide 2-amino-1,4-benzène dicarboxylique de formule HO₂C-C₆H₃-NH₂-CO₂H (noté NH₂-H₂-BDC). Il s'agit d'un composé commercialisé. L'acide 2-aminotéréphtalique, introduit dans la solution obtenue à ladite étape i), est présent dans un solvant organique polaire ou un mélange de solvants organiques polaires. Ledit solvant est préférentiellement choisi parmi le diméthylformamide (DMF), le diméthylsulfoxide (DMSO), le méthanol (MeOH), l'éthanol (EtOH), l'eau (H₂O) et le tétrahydrofurane (THF). Un mélange de solvants organiques polaires comprend au moins deux solvants choisis parmi cette liste. Par exemple, l'acide 2-aminotéréphtalique est présent dans un mélange DMSO/MeOH, DMF/EtOH, THF/H₂O pour son ajout dans la solution obtenue à ladite étape i).

Conformément à ladite étape iii) dudit premier procédé de préparation selon l'invention, ladite base B est préférentiellement choisie parmi le 1,4-diazabicyclo[2.2.2] octane (DABCO), le 1,8-diazabicyclo[5.4.0]undec-7-ene (DBU), la triéthylamine, la pyridine, la soude et l'ammoniaque. Ladite base, introduite dans la solution obtenue à ladite étape ii), est présente dans un solvant organique polaire ou un mélange de solvants organiques polaires. Ledit solvant est préférentiellement choisi parmi le diméthylformamide (DMF), le diméthylsulfoxide (DMSO), le méthanol (MeOH), l'éthanol (EtOH), l'eau (H₂O) et le tétrahydrofurane (THF). Un mélange de solvants organiques polaires S comprend au moins deux solvants choisis parmi cette liste. Par exemple, ladite base est présente dans un mélange DMSO/MeOH, DMF/EtOH, THF/H₂O pour son ajout dans la solution obtenue à ladite étape ii).

Le mélange réactionnel obtenu à l'issue de ladite étape iii) présente avantageusement la composition molaire suivante : 1 Préc-In : 1 à 3 NH₂-H₂-BDC : 1,8 à 6 B : 40 à 500 S. De manière plus avantageuse, la composition molaire est la suivante : 1 Préc-In : 1 à 2 NH₂-H₂-BDC : 2 à 6 B : 40 à 500 S. De manière encore plus avantageuse, la composition molaire est la suivante : 1 Préc-In : 1 NH₂-H₂-BDC : 2 B : 40 à 500 S. La formulation de la composition molaire donnée ci-dessus est exprimée en équivalent molaire. Dans cette formulation, PrécIn, NH₂-H₂-BDC et B désignent respectivement le précurseur d'indium, l'acide 2-amino-1,4-benzène dicarboxylique et la base. Le nombre de moles de solvant(s) polaire(s) S correspond au nombre de moles total de solvant(s) polaire(s) présent dans le mélange réactionnel suite à la mise en solution du précurseur d'indium, de l'acide 2-aminotéréphtalique et de la base dans au moins un solvant polaire. Le solvant polaire employé pour la mise en oeuvre de chacune des étapes i), ii) et iii) dudit premier procédé de préparation selon l'invention peut être identique ou différent, préférentiellement identique.

Conformément à ladite étape iv) dudit premier procédé de préparation selon l'invention, l'étape de précipitation est réalisée à une température comprise entre 0°C et 100°C, préférentiellement entre 10°C et 60°C, le plus souvent à température ambiante. La durée de ladite étape de précipitation est préférentiellement comprise entre 1 et 8 heures, très préférentiellement entre 1 et 4 heures.

A l'issue de ladite étape de précipitation, on effectue, conformément à ladite étape v) dudit premier procédé de préparation selon l'invention, une filtration de manière à récupérer le matériau cristallisé IHM-2, suivie d'une étape de lavage laquelle est effectuée dans un solvant organique polaire, par exemple le DMF, entre 100°C et 200°C, préférentiellement entre 150 et 180°C, pendant une durée variant avantageusement entre 12 et 48 heures, le plus souvent entre 18 et 36 heures. Puis le solide est avantageusement imprégné, le plus souvent, par un extracteur de Soxhlet avec un solvant volatil, de façon préférée avec le dichlorométhane, pendant une durée variant entre 24 et 72 heures, le plus souvent 48 heures.

Conformément à ladite étape vi) dudit premier procédé de préparation selon l'invention, on procède au séchage du solide obtenu à l'issue de ladite étape v) de filtration et de lavage. Le séchage est réalisé à une température comprise préférentiellement entre 40 et 200°C, très préférentiellement entre 40°C et 150°C et de manière encore plus préférée entre 95°C et 130°C. La durée du séchage est comprise entre 1 et 24 heures, de préférence entre 10 et 20 heures. Le séchage peut être effectué sous vide ou sous air, de préférence sous air.

Le matériau cristallisé obtenu à l'issue de ladite étape vi) dudit premier procédé de préparation selon l'invention est identifié comme étant le matériau hybride cristallisé IHM-2 selon l'invention.

Ledit matériau hybride cristallisé IHM-2 préparé selon l'invention et tel que décrit dans la présente description peut être utilisé comme adsorbant ou comme catalyseur.

Un catalyseur contenant ledit matériau IHM-2 se présente préférentiellement sous forme de poudres, de billes, d'extrudés ou de pastilles. La mise en forme peut être réalisée par toute méthode connue de l'Homme du métier (US-B-6,893,564). Un adsorbant contenant ledit matériau IHM-2 peut également se présenter sous forme de poudres, de billes, d'extrudés ou de pastilles.

Par exemple, pour la mise en forme par pastillage, on utilise notamment un pastillage par presse à piston, par presse à rouleau, avec ou sans liants.

Les poudres de matériau IHM-2 peuvent subir une granulation avec, par exemple, utilisation de liants organiques ou inorganiques tel que décrit dans la demande de brevet WO 2006/050898. L'utilisation de liants, charges, agents de peptisation permet, en outre, des mises en forme sous forme d'extrudés par malaxage-extrusion, ou sous forme de billes par le procédé de coagulation en goutte.

La mise en forme dudit matériau IHM-2 peut également être réalisée par imprégnation dudit matériau sur un support préformé selon des méthodes bien connues de l'Homme du métier.

Tous ces types de mise en forme peuvent être réalisés en présence ou absence de liant.

L'invention est illustrée par les exemples suivants qui ne présentent, en aucun cas, un caractère limitatif.

### Exemples

### Exemple 1 : Préparation par précipitation du matériau hybride cristallisé IHM-2 à matrice mixte organique-inorganique selon l'invention

4,82 mL (3,3 mmol) d'une solution de nitrate d'indium (Alfa Aesar, 99.99%) dans le diméthylformamide (DMF, Aldrich, 99,8%) de concentration 0,68 mol/L sont placés dans un récipient en pyrex de 100 mL de volume intérieur. 10,06 mL (3,3 mmol) d'une solution d'acide 2-amino-1,4-benzène dicarboxylique (Alfa Aesar, 99%) dans du DMF de concentration 0,33 mol/L y sont ajoutés. Le mélange est agité pendant 5 minutes à l'aide d'un agitateur magnétique. Après homogénéisation, 4,83 mL (6,7 mmol) d'une solution de 1,4-diazabicyclo[2.2.2] octane (DABCO, Aldrich, 98%) dans le DMF de concentration 1,38 mol/L sont ajoutés. Le mélange réactionnel présente la composition molaire suivante : 3,3 mmoles de précurseur d'indium In(NO₃)₃ : 3,3 mmoles d'acide 2-aminotéréphtalique : 6,7 mmoles de DABCO : 256 mmoles de DMF soit en équivalent molaire : 1 In(NO₃)₃ : 1 NH₂-H₂-BDC : 2 DABCO : 77 S. La solution est agitée pendant 120 minutes à température ambiante de manière à procéder à la précipitation de l'acide 2-amino-1,4-benzène dicarboxylique et du nitrate d'indium avec le DABCO. Après refroidissement et filtration, le solide cristallisé obtenu est lavé (24 heures) avec une solution à chaud (160°C) de DMF puis est imprégné avec du dichlorométhane pendant une durée de 48 heures. Après séchage à l'air à une température égale à 120 °C pendant une durée de 12 heures, on obtient un matériau sous forme de poudre lequel est analysé par diffraction des rayons X et identifié comme étant constitué de cristaux de solide IHM-2 présentant un diagramme de diffraction de rayons X incluant au moins les raies inscrites dans le tableau 1.

### Exemple 3 : Préparation par précipitation du matériau hybride cristallisé IHM-2 pour différentes combinaisons de bases et de solvants.

La synthèse décrite dans l'exemple 1 est reproduite plusieurs fois, en faisant varier la base et le solvant, les autres conditions opératoires restant identiques.

On prépare ainsi le matériau hybride cristallisé IHM-2 en utilisant comme base le 1,8-diazabicyclo[5.4.0]undec-7-ene (DBU), la triéthylamine (Et₃N), le 1,4-diazabicyclo[2.2.2] octane (DABCO) et la pyridine. La synthèse en présence de chacune de ces bases est reproduite en faisant varier le solvant organique polaire.

Dans une première série de synthèses, on prépare le matériau hybride cristallisé IHM-2 en présence de 1,8-diazabicyclo[5.4.0]undec-7-ene (DBU) comme base et d'un seul solvant polaire (DMF) ou d'un mélange de solvants polaires. On réalise ainsi plusieurs synthèses différentes dans les mêmes conditions opératoires et de synthèse (composition molaire) que celles décrites dans l'exemple 1. Les mélanges de solvants polaires employés sont : mélange THF/H₂O, mélange DMSO/MeOH, mélange DMSO/H₂O, mélange DMF/EtOH, mélange DMF/H₂O. Les solvants polaires utilisés dans chacune des synthèses sont employés à la place du DMF utilisé dans l'exemple 1.

Chaque solide ainsi obtenu est analysé par diffraction des rayons X et identifié comme étant constitué de cristaux de solide IHM-2 présentant un diagramme de diffraction de rayons X incluant au moins les raies inscrites dans le tableau 1.

Dans une deuxième série de synthèses, on prépare le matériau hybride cristallisé IHM-2 en présence de triéthylamine (Et₃N) comme base et d'un seul solvant polaire (DMF) ou d'un mélange de solvants polaires. On réalise ainsi plusieurs synthèses différentes dans les mêmes conditions opératoires et de synthèse (composition molaire) que celles décrites dans l'exemple 1. Les mélanges de solvants polaires employés sont : mélange THF/H₂O, mélange DMSO/MeOH, mélange DMF/EtOH, mélange DMF/H₂O. Les solvants polaires utilisés dans chacune des synthèses sont employés à la place du DMF utilisé dans l'exemple 1.

Chaque solide ainsi obtenu est analysé par diffraction des rayons X et identifié comme étant constitué de cristaux de solide IHM-2 présentant un diagramme de diffraction de rayons X incluant au moins les raies inscrites dans le tableau 1.

Dans une troisième série de synthèses, on prépare le matériau hybride cristallisé IHM-2 en présence de 1,4-diazabicyclo[2.2.2] octane (DABCO) comme base et d'un mélange de solvants polaires. On réalise ainsi plusieurs synthèses différentes dans les mêmes conditions opératoires et de synthèse (composition molaire) que celles décrites dans l'exemple 1. Les mélanges de solvants polaires employés sont : mélange THF/H₂O, mélange DMSO/MeOH, mélange DMSO/H₂O, mélange DMF/EtOH, mélange DMF/H₂O. Les solvants polaires utilisés dans chacune des synthèses sont employés à la place du DMF utilisé dans l'exemple 1.

Chaque solide ainsi obtenu est analysé par diffraction des rayons X et identifié comme étant constitué de cristaux de solide IHM-2 présentant un diagramme de diffraction de rayons X incluant au moins les raies inscrites dans le tableau 1.

Dans une quatrième série de synthèses, on prépare le matériau hybride cristallisé IHM-2 en présence de pyridine comme base et d'un seul solvant polaire (DMF) ou d'un mélange de solvants polaires. On réalise ainsi plusieurs synthèses différentes dans les mêmes conditions opératoires et de synthèse (composition molaire) que celles décrites dans l'exemple 1. Les mélanges de solvants polaires employés sont : mélange THF/H₂O, mélange DMF/EtOH, mélange DMF/H₂O. Les solvants polaires utilisés dans chacune des synthèses sont employés à la place du DMF utilisé dans l'exemple 1.

Chaque solide ainsi obtenu est analysé par diffraction des rayons X et identifié comme étant constitué de cristaux de solide IHM-2 présentant un diagramme de diffraction de rayons X incluant au moins les raies inscrites dans le tableau 1.

### Exemple 4 : Mise en forme du matériau IHM-2 pour utilisation comme catalyseur

Le pastillage du matériau hybride cristallisé IHM-2 obtenu à l'exemple 1 est réalisé à l'aide d'une presse de marque Korsch (modèle EK0). Le poinçon inférieur présentant un trou de diamètre 3,5 mm permet de mettre en forme ledit matériau sous forme de pastilles de 3,5 mm de diamètre.

Le matériau IHM-2 obtenu à l'exemple 1 sous forme de poudre est préalablement mélangé à 0,25% poids de graphite. Le sabot de remplissage de la presse est rempli de ce mélange et on procède au compactage avec les paramètres suivants : filière de 15 mm de profondeur, profondeur de pénétration du poinçon supérieur égale à 11 mm, vitesse de rotation du rotor égale à 25 tours par minute, dimensions de chaque pastille : diamètre égal à 3,5 mm, épaisseur égale à 4 mm.

On obtient ainsi un catalyseur constitué du matériau hybride cristallisé IHM-2.

## Revendications

1. Procédé de préparation d'un matériau hybride cristallisé à matrice organique-inorganique IHM-2 contenant un réseau inorganique de centres métalliques à base de l'élément indium connectés entre eux par des ligands organiques formés par l'entité 2-aminotéréphtalate - O₂C-C₆H₃-NH₂-CO₂-, présentant un diagramme de diffraction des rayons X incluant au moins les raies inscrites dans le tableau ci-dessous :
| 2 Thêta (°) | dₕₖₗ (Å) | I/I₀ | 2 Thêta (°) | dₕₖₗ (Å) | I/I₀ |
|---|---|---|---|---|---|
| 4,70 | 18,80 | mf | 27,71 | 3,22 | ff |
| 8,12 | 10,88 | ff | 28,42 | 3,14 | ff |
| 9,37 | 9,43 | FF | 29,73 | 3,00 | f |
| 12,41 | 7,13 | ff | 30,14 | 2,96 | ff |
| 13,12 | 6,74 | ff | 31,23 | 2,86 | ff |
| 14,10 | 6,28 | ff | 32,96 | 2,72 | ff |
| 14,76 | 6,00 | ff | 33,47 | 2,68 | ff |
| 16,29 | 5,44 | f | 34,29 | 2,61 | ff |
| 16,95 | 5,23 | f | 35,42 | 2,53 | ff |
| 18,83 | 4,71 | mf | 37,99 | 2,37 | ff |
| 20,54 | 4,32 | ff | 41,75 | 2,16 | ff |
| 21,07 | 4,21 | ff | 42,73 | 2,11 | ff |
| 23,61 | 3,76 | ff | 43,98 | 2,06 | ff |
| 24,68 | 3,60 | ff | 49,18 | 1,85 | ff |
| 24,99 | 3,56 | f | 51,55 | 1,77 | ff |
| 26,01 | 3,42 | ff | 53,58 | 1,71 | ff |
| 26,44 | 3,37 | f | 54,45 | 1,68 | ff |
où FF=très fort ; F=fort ; m=moyen ; mf=moyen faible ; f=faible ; ff=très faible, l'intensité I/I0 étant donnée en rapport à une échelle d'intensité relative où il est attribué une valeur de 100 à la raie la plus intense du diagramme de diffraction de rayons X : ff<15 ; 15≤ f <30 ; 30≤ mf< 50 ; 50≤ m<65 ; 65≤ F<85 ; FF≥ 85, ledit procédé comprenant au moins les étapes suivantes
i) la dissolution d'au moins un précurseur d'indium (Préc-In) dans au moins un solvant organique polaire,
ii) l'ajout d'acide 2-aminotéréphtalique (NH₂-H₂-BDC) en solution dans au moins un solvant organique polaire,
iii) l'ajout d'une base B, en solution dans au moins un solvant organique polaire, dans le mélange obtenu à l'étape ii),
iv) la précipitation de l'acide 2-aminotéréphtalique et dudit précurseur d'indium avec ladite base,
v) la filtration et le lavage, et
vi) le séchage du matériau obtenu.

2. Procédé de préparation selon la revendication 1 tel que ledit précurseur d'indium employé dans ladite étape i) est le nitrate d'indium.

3. Procédé de préparation selon la revendication 1 ou la revendication 2 tel que ladite base employée dans ladite étape iii) est choisie parmi le 1,4-diazabicyclo[2.2.2] octane (DABCO), le 1,8-diazabicyclo[5.4.0]undec-7-ene (DBU), la triéthylamine, la pyridine, la soude et l'ammoniaque.

4. Procédé de préparation selon l'une des revendications 1 à 3 tel que le mélange réactionnel obtenu à l'issue de ladite étape iii) présente la composition molaire suivante : 1 Préc-In : 1 à 3 NH₂-H₂-BDC : 1,8 à 6 B : 40 à 500 S, où le nombre de moles de solvant(s) polaire(s) S correspond au nombre de moles total de solvant(s) polaire(s) présent dans le mélange réactionnel suite à la mise en solution du précurseur d'indium, de l'acide 2-aminotéréphtalique et de la base dans au moins un solvant polaire.

5. Procédé de préparation selon l'une des revendications 1 à 4 tel que ladite étape iv) de précipitation est réalisée à une température comprise entre 10 et 60°C.

6. Procédé de préparation selon l'une des revendications 1 à 5 tel que la durée de ladite étape iv) de précipitation est comprise entre 1 et 8 heures.

7. Procédé de préparation selon l'une des revendications 1 à 6 tel que chaque ligand organique -O₂C-C₆H₃-NH₂-CO₂- (NH₂-BDC) est relié à deux atomes d'indium.

8. Procédé de préparation selon l'une des revendications 1 à 7 tel qu'il présente une composition chimique ayant pour motif de base In(OH)(-O₂C-C₆H₃-NH₂-CO₂-).

9. Procédé de préparation selon l'une des revendications 1 à 8 tel chaque atome d'indium est entouré de deux atomes d'oxygène des groupements hydroxyles se situant en position apicale et de quatre atomes d'oxygène issus de quatre ligands 2-aminotéréphtalate se localisant en position équatoriale.

## Patentansprüche

1. Verfahren zur Herstellung eines kristallisierten Hybridmaterials IHM-2 mit organisch-anorganischer Matrix, der ein anorganisches Netzwerk mit Metallzentren auf der Basis des Elements Indium enthält, die miteinander durch organische Liganden verbunden sind, die aus der 2-Aminoterephtalat-Spezies -O₂C-C₆H₃-NH₂-CO₂- bestehen, der ein Röntgenbeugungsdiagramm aufweist, das mindestens die Peaks enthält, die in der nachfolgenden Tabelle eingetragen sind:
| 2 theta (°) | dₕₖₗ(Å) | I/I₀ | 2 theta (°) | dₕₖₗ(Å) | I/I₀ |
|---|---|---|---|---|---|
| 4,70 | 18,80 | mf | 27,71 | 3,22 | ff |
| 8,12 | 10,88 | ff | 28,42 | 3,14 | ff |
| 9,37 | 9,43 | FF | 29,73 | 3,00 | f |
| 12,41 | 7,13 | ff | 30,14 | 2,96 | ff |
| 13,12 | 6,74 | ff | 31,23 | 2,86 | ff |
| 14,10 | 6,28 | ff | 32,96 | 2,72 | ff |
| 14,76 | 6,00 | ff | 3347 | 2,68 | ff |
| 16,29 | 5,44 | f | 34,29 | 2,61 | ff |
| 16,95 | 5,23 | f | 35,42 | 2,53 | ff |
| 18,83 | 4,71 | mf | 37,99 | 2,37 | ff |
| 20,54 | 4,32 | ff | 41,75 | 2,16 | ff |
| 21,07 | 4,21 | ff | 42,73 | 2,11 | ff |
| 23,61 | 3,76 | ff | 43,98 | 2,06 | ff |
| 24,68 | 3,60 | ff | 49,18 | 1,85 | ff |
| 24,99 | 3,56 | f | 51,55 | 1,77 | ff |
| 26,01 | 3,42 | ff | 53,58 | 1,71 | ff |
| 26,44 | 3,37 | f | 54,45 | 1,68 | ff |
wobei FF = sehr stark; F = stark; m = mittel; mf = mittelschwach; f = schwach; ff = sehr schwach. Die Intensität I/I₀ wird bezogen auf eine relative Intensitätsskala angegeben, wobei dem intensivsten Peak des Röntgenbeugungsdiagramms ein Wert von 100 zugeschrieben wird: ff<15; 15≤f<30; 30≤mf<50; 50≤m<65; 65≤F<85; FF≥85, wobei das Verfahren mindestens die folgenden Schritte umfasst:
i) Auflösen mindestens eines Indiumvorläufers (In-Prec) in mindestens einem polaren organischen Lösemittel,
ii) Zugeben von 2-Aminoterephtalsäure (NH₂-H₂-BDC), aufgelöst in mindestens einem polaren organischen Lösemittel,
iii) Zugeben einer Base B, aufgelöst in mindestens einem polaren organischen Lösemittel, zu dem in Schritt ii) erhaltenen Gemisch,
iv) Ausfällen der 2-Aminoterephtalsäure und des Indiumvorläufers mit dieser Base,
v) Filtern und Waschen und
vi) Trocknen des erhaltenen Materials.

2. Herstellungsverfahren nach Anspruch 1, wobei der in Schritt i) verwendete Indiumvorläufer Indiumnitrat ist.

3. Herstellungsverfahren nach Anspruch 1 oder 2, wobei die in Schritt iii) verwendete Base ausgewählt ist aus 1,4-Diazabicyclo[2.2.2]octan (DABCO), 1,8-Diazabicyclo[5.4.0]undec-7-en (DBU), Triethylamin, Pyridin, Soda und Ammoniak.

4. Verfahren zur Herstellung nach einem der Ansprüche 1 bis 3, wobei das am Ende von Schritt iii) erhaltene Reaktionsgemisch die folgende Molzusammensetzung aufweist: 1 In-Prec : 1 bis 3 NH₂-H₂-BDC : 1,8 bis 6 B : 40 bis 500 S, worin die Molzahl an polarem Lösemittel(n) S der Gesamtmolzahl an polarem Lösemittel(n) entspricht, die in dem Reaktionsgemisch nach der Auflösung des Indiumvorläufers, der 2-Aminoterephtalsäure und der Base in mindestens einem polaren Lösemittel vorhanden ist.

5. Herstellungsverfahren nach einem der Ansprüche 1 bis 4, wobei der Schritt iv) zum Ausfällen bei einer Temperatur im Bereich zwischen 10 und 60 °C durchgeführt wird.

6. Verfahren zur Herstellung nach einem der Ansprüche 1 bis 5, wobei die Dauer von Schritt iv) zum Ausfällen im Bereich zwischen 1 und 8 Stunden liegt.

7. Herstellungsverfahren nach einem der Ansprüche 1 bis 6, wobei jeder organische Ligand -O₂C-C₆H₃-NH₂-CO₂- (NH₂-BDC) mit zwei Indiumatomen verbunden ist.

8. Herstellungsverfahren nach einem der Ansprüche 1 bis 7, wobei er eine chemische Zusammensetzung aufweist, die als Grundeinheit In(OH)(-O₂C-C₆H₃-N₃-CO₂-) aufweist.

9. Herstellungsverfahren nach einem der Ansprüche 1 bis 8, wobei jedes Indiumatom von zwei Sauerstoffatomen der Hydroxylgruppen umgeben ist, die sich an apikaler Position befinden, und von vier Sauerstoffatomen, die aus vier 2-Aminoterephtalat-Liganden stammen, die an äquatorialer Position liegen.

## Claims

1. Process for the preparation of an IHM-2 crystallized hybrid material with an organic-inorganic matrix that contains an inorganic network of metal centers that are based on the element indium and that are connected to one another by organic ligands that are formed by the entity 2-aminoterephthalate-O₂C-C₆H₃-NH₂-CO₂-, having an X-ray diffraction diagram that includes at least the lines that are recorded in the table below:
| 2 Theta (°) | dₕₖₗ (Å) | I/I₀ | 2 Theta (°) | dₕₖₗ (Å) | I/I₀ |
|---|---|---|---|---|---|
| 4.70 | 18.80 | mf | 27.71 | 3.22 | ff |
| 8.12 | 10.88 | ff | 28.42 | 3.14 | ff |
| 9.37 | 9.43 | FF | 29.73 | 3.00 | f |
| 12.41 | 7.13 | ff | 30.14 | 2.96 | ff |
| 13.12 | 6.74 | ff | 31.23 | 2.86 | ff |
| 14.10 | 6.28 | ff | 32.96 | 2.72 | ff |
| 14.76 | 6.00 | ff | 33.47 | 2.68 | ff |
| 16.29 | 5.44 | f | 34.29 | 2.61 | ff |
| 16.95 | 5.23 | f | 35.42 | 2.53 | ff |
| 18.83 | 4.71 | mf | 37.99 | 2.37 | ff |
| 20.54 | 4.32 | ff | 41.75 | 2.16 | ff |
| 21.07 | 4.21 | ff | 42.73 | 2.11 | ff |
| 23.61 | 3.76 | ff | 43.98 | 2.06 | ff |
| 24.68 | 3.60 | ff | 49.18 | 1.85 | ff |
| 24.99 | 3.56 | f | 51.55 | 1.77 | ff |
| 26.01 | 3.42 | ff | 53.58 | 1.71 | ff |
| 26.44 | 3.37 | f | 54.45 | 1.68 | ff |
where FF = Very High; F = High; m = Medium; mf = Medium Low; f = Low; and ff = Very Low. The intensity I/I₀ is provided in relation to a relative intensity scale where a value of 100 is assigned to the most intense line of the X-ray diffraction diagram: ff < 15; 15 ≤ f < 30; 30 ≤ mf < 50; 50 ≤ m < 65; 65 ≤ F < 85; and FF ≥ 85, said process comprising at least the following stages:
i) The dissolution of at least one indium precursor (In prec) in at least one polar organic solvent,
ii) The addition of 2-aminoterephthalic acid (NH₂-H₂-BDC) in solution in at least one polar organic solvent,
iii) The addition of a base B, in solution in at least one polar organic solvent, in the mixture that is obtained in stage ii),
iv) The precipitation of the 2-aminoterephthalic acid and said indium precursor with said base,
v) The filtration and the washing, and
vi) The drying of the material that is obtained.

2. Process for preparation according to Claim 1, such that said indium precursor that is used in said stage i) is indium nitrate.

3. Process for preparation according to Claim 1 or Claim 2, such that said base that is employed in said stage iii) is selected from among 1,4-diazabicyclo[2.2.2]octane (DABCO), 1,8-diazabicyclo[5.4.0]undec-7-ene (DBU), triethylamine, pyridine, soda and ammonia.

4. Process for preparation according to one of Claims 1 to 3, such that the reaction mixture that is obtained at the end of said stage iii) has the following molar composition: 1 In prec : 1 to 3 NH₂-H₂-BDC : 1.8 to 6 B : 40 to 500 S, where the number of moles of polar solvent(s) S corresponds to the total number of moles of polar solvent(s) present in the reaction mixture following the solubilization of the indium precursor, the 2-aminoterephthalic acid, and the base in at least one polar solvent.

5. Process for preparation according to one of Claims 1 to 4, such that said precipitation stage iv) is carried out at a temperature of between 10 and 60°C.

6. Process for preparation according to one of Claims 1 to 5, such that the period of said precipitation stage iv) is between 1 and 8 hours.

7. Process for preparation according to Claim 1 or Claim 6, such that each organic ligand -O₂C-C₆H₃-NH₂-CO₂- (NH₂-BDC) is connected to two indium atoms.

8. Process for preparation according to one of Claims 1 to 7, such that it has a chemical composition that has In(OH)(-O₂C-C₆H₃-NH₂-CO₂-) as a base pattern.

9. Process for preparation according to one of Claims 1 to 8, such that each indium atom is surrounded by two oxygen atoms from hydroxyl groups that are located in apical position and four oxygen atoms that are obtained from four 2-aminoterephthalate ligands that are located in equatorial position.
